# EUROPÄISCHE PATENTSCHRIFT

(11) **EP 2 028 709 B1**
(45) Veröffentlichungstag und Bekanntmachung des Hinweises auf die Patenterteilung: **19.10.2011**
(21) Anmeldenummer: 08162157.5
(22) Anmeldetag: 11.08.2008
(51) Int. Cl.: H01M 8/04, H01M 8/06, H01M 8/24

(54) **Brennstoffzellensystem**
Fuel cell system
Système de pile à combustible

(30) Priorität: 17.08.2007 DE 102007039017
(43) Veröffentlichungstag der Anmeldung: 25.02.2009
(73) Patentinhaber: J. Eberspächer GmbH & Co. KG, 73730 Esslingen (DE)
(72) Erfinder: Reiners, Karsten, 73732 Esslingen (DE)
(74) Vertreter: BRP Renaud & Partner

(56) Entgegenhaltungen:
- EP-A- 0 374 636
- EP-A- 0 654 838
- EP-A- 1 347 529
- DE-A1- 4 446 841
- DE-C1- 19 910 695

## Beschreibung

Die vorliegende Erfindung betrifft ein Brennstoffzellensystem, insbesondere in einem Kraftfahrzeug, mit den Merkmalen des Oberbegriffs des Anspruchs 1 oder 3.

Üblicherweise umfasst ein Brennstoffzellensystem zumindest eine Brennstoffzelle zum Generieren von elektrischem Strom aus Wasserstoffgas enthaltendem Anodengas und Sauerstoffgas enthaltendem Kathodengas. Ferner kann ein solches Brennstoffzellensystem einen Reformer zum Generieren von Wasserstoffgas enthaltendem Anodengas aus Wasserstoff enthaltendem Kraftstoff und Sauerstoff enthaltendem Oxidatorgas umfassen. Um die thermische Effizienz des Brennstoffzellensystems zu verbessern, ist es grundsätzlich möglich, eine thermisch isolierende Isolationshülle vorzusehen, die einen Innenraum umhüllt, in dem zumindest die Brennstoffzelle angeordnet ist. Optional kann in diesem Innenraum auch der Reformer angeordnet sein.

Aus der EP 1 624 516 A1 ist ein Brennstoffzellensystem bekannt, bei dem die Brennstoffzelle in einem Einbauraum angeordnet ist, aus dem Kathodengas zur Versorgung der Brennstoffzelle angesaugt wird. Hierdurch kann die Bildung eines explosiven Gemisches in diesem Einbauraum bzw. in der jeweiligen Umgebung des Brennstoffzellensystems reduziert werden. Ein derartiges explosives Gemisch kann durch Leckagen entstehen, durch die Brenngas in die Umgebung des Brennstoffzellensystems bzw. in den Einbauraum gelangt.

Aus der EP 0 654 838 A1 ist ein Brennstoffzellensystem bekannt, das einen Reformer zum Generieren von Wasserstoffgas enthaltendem Anodengas aus einem Wasserstoff enthaltenden Kraftstoff und einem Sauerstoff enthaltenden Oxidatorgas aufweist. Ferner umfasst das bekannte Brennstoffzellensystem eine Brennstoffzelle zum Generieren von elektrischem Strom aus dem Anodengas und einem Sauerstoffgas enthaltendem Kathodengas sowie eine thermisch isolierende Isolationshülle, die einen zumindest die Brennstoffzelle bzw. den Reformer aufnehmenden Innenraum umhüllt. Ein Gaspfad zur Versorgung der Brennstoffzelle mit Kathodengas bzw. zur Versorgung des Reformers mit Oxidatorgas ist dabei so durch die Isolationshülle hindurchgeführt, dass deren Innenraum einen Bestandteil des Gaspfads bildet. Im Innenraum verläuft dieser Gaspfad so, dass das Kathodengas bzw. das Oxidatorgas dem Reformer bzw. der Brennstoffzelle Wärme entzieht, bevor es in die Brennstoffzelle bzw. in den Reformer eintritt. Darüber hinaus ist beim bekannten Brennstoffzellensystem im Innenraum ein Restgasbrenner angeordnet, der im Betrieb Wasserstoffgas enthaltendes Anodenabgas mit Sauerstoffgas enthaltendem Kathodenabgas verbrennt, wobei der Gaspfad im Innenraum außerdem so verläuft, dass das Kathodengas dem Restgasbrenner Wärme entzieht, bevor es in die Brennstoffzelle eintritt.

Aus der EP 1 357 529 A2 ist eine Brennstoffzelle bekannt, deren Gehäuse als Wärmeübertrager ausgestaltet ist, um Oxidatorluft mit den Brennstoffzellenabgasen vorzuwärmen.

Aus der DE 199 10 695 C1 ist es bekannt, die Brennstoffzellenluft durch die Isolationshülle anzusaugen.

Ein weiteres Brennstoffzellensystem ist aus der EP 0 374 636 A1 bekannt.

Die vorliegende Erfindung beschäftigt sich dem Problem, für ein Brennstoffzellensystem der eingangs genannten Art eine verbesserte Ausführungsform anzugeben, die sich insbesondere durch einen erhöhten Wirkungsgrad auszeichnet.

Dieses Problem wird erfindungsgemäß durch die Gegenstände der unabhängige Ansprüche gelöst. Vorteilhafte Ausführungsformen sind Gegenstand der abhängigen Ansprüche.

Die Erfindung beruht auf dem allgemeinen Gedanken, den von der Isolationshülle umhüllten Innenraum in den Gaspfad zur Versorgung der Brennstoffzelle mit Kathodengas bzw. in den Gaspfad zur Versorgung des Reformers mit Oxidatorgas zu integrieren und so auszugestalten, dass das Kathodengas bzw. des Oxidatorgas der Brennstoffzelle und/oder dem Reformer Wärme entzieht, bevor es in die Brennstoffe bzw. in den Reformer eintritt. Auf diese Weise lässt sich einerseits eine Kühlung der Brennstoffzelle bzw. des Reformers erzielen, während andererseits eine Vorwärmung des Kathodengases bzw. des Oxidatorgases erreicht wird, was den Brennstoffzellenprozess bzw. den Reformerprozess begünstigt. Diese Vorwärmung des jeweiligen Gases ist insbesondere bei einem Wiederstart oder Warmstart des Brennstoffzellensystems von besonderem Interesse, um das System möglichst rasch auf Betriebstemperatur bringen zu können. Durch den so verkürzten Warmstart lässt sich die Effizienz des Systems erhöhen.

Das Brennstoffzellensystem ist mit einem Restgasbrenner ausgestattet, in dem eine Verbrennung von Wasserstoffgas enthaltendem Anodenabgas mit Sauerstoffgas enthaltendem Kathodenabgas realisierbar ist. Der Gaspfad im Innenraum der Isolationshülle lässt sich nun optional gezielt so führen, dass zumindest das Kathodengas und/oder das Oxidatorgas diesem Restgasbrenner Wärme entzieht, bevor es zur Brennstoffzelle bzw. zum Reformer gelangt. Diese Bauweise unterstützt vor allem einen Neustart oder Kaltstart des Brennstoffzellensystems, bei dem sämtliche Komponenten im wesentlichen Umgebungstemperatur aufweisen. Da bei kalter Brennstoffzelle in dieser keine Umsetzung von Anodengas und Kathodengas erfolgt, lässt sich im Restgasbrenner umso mehr Anodengas mit Kathodengas verbrennen, wodurch eine entsprechend große Abwärme erzielt wird. Diese lässt sich durch die gezielte Gasführung im Innenraum zum Vorwärmen des Kathodengases bzw. des Oxidatorgases nutzen, was die Aufheizung der Brennstoffzelle bzw. des Reformers auf die jeweilige Betriebstemperatur verkürzt. Auch hier führt das verkürzte Hochfahren des Brennstoffzellensystems zu einem erhöhten Wirkungsgrad.

Besonders vorteilhaft ist nun bei der Erfindung, dass der Gaspfad im Innenraum steuerbar ist, und zwar so, dass zumindest das Kathodengas bzw. das Oxidatorgas während eines Kaltstartbetriebs bevorzugt oder ausschließlich den Restgasbrenner bzw. einen dem Restgasbrenner nachgeordneten Wärmeübertrager beaufschlagt und während eines Warmstartbetriebs bzw. während eines Normalbetriebs bevorzugt oder ausschließlich die Brennstoffzelle bzw. den Reformer beaufschlagt, um Wärme aufzunehmen. Hierdurch lässt sich im System vorhandene Wärme gezielt zur Wirkungsgradsteigerung nutzen.

Die Wärmeübertragung vom Restgasbrenner bzw. von der Brennstoffzelle oder vom Reformer auf das jeweilige Gas kann beispielsweise dadurch realisiert werden, dass das Kathodengas bzw. das Oxidatorgas die jeweilige Komponente anströmt und/oder umströmt, wodurch die Wärmeübertragung auf das strömende Gas begünstigt wird.

Weitere wichtige Merkmale und Vorteile der Erfindung ergeben sich aus den Unteransprüchen, aus den Zeichnungen und aus der zugehörigen Figurenbeschreibung anhand der Zeichnungen. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Brennstoffzellensystem,
- Fig. 2: eine Darstellung wie in Fig. 1, jedoch bei einem anderen Betriebszustand,
- Fig. 3: eine Darstellung wie in Fig. 1, jedoch bei einer anderen Ausführungsform.

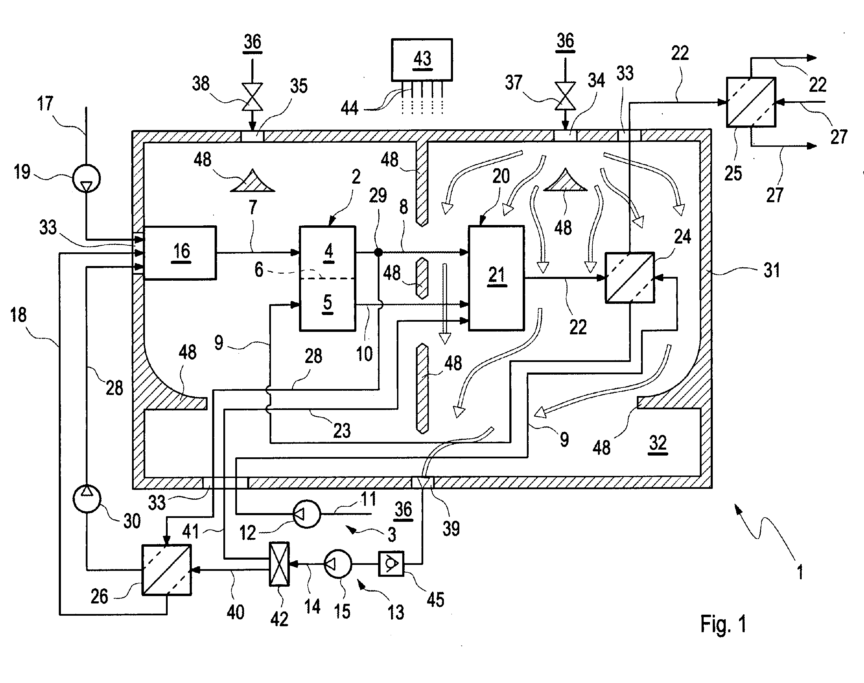

Entsprechend den Fig. 1 bis 3 umfasst ein Brennstoffzellensystem 1, das vorzugsweise in einem Kraftfahrzeug angeordnet sein kann, zumindest eine Brennstoffzelle 2 sowie eine (erste) Oxidatorversorgungseinrichtung 3. Die Brennstoffzelle 2 dient in üblicher Weise zum Generieren von Strom aus einem Wasserstoffgas enthaltenden Brenngas und einem Sauerstoffgas enthaltenden Oxidatorgas. Das Brenngas wird dabei einer Anodenseite 4 der Brennstoffzelle 2 zugeführt, während das Oxidatorgas, bei dem es sich zweckmäßig um Luft handelt, einer Kathodenseite 5 der Brennstoffzelle 2 zugeführt wird. In der Brennstoffzelle 2 trennt ein Elektrolyt 6 die Anodenseite 4 von der Kathodenseite 5. Üblicherweise besteht die Brennstoffzelle 2 aus einem Stapel mehrerer Brennstoffzellenelemente, in denen jeweils die Anodenseite 4 durch einen Elektrolyten 6 von der Kathodenseite 5 getrennt ist. Vorzugsweise handelt es sich bei der Brennstoffzelle 2 um eine Hochtemperatur-Brennstoffzelle, die insbesondere als Festkörper-Brennstoffzelle bzw. als SOFC-Brennstoffzelle ausgestaltet sein kann. Ebenso ist es grundsätzlich möglich, die Brennstoffzelle 2 als Niedertemperatur-Brennstoffzelle auszugestalten, die insbesondere eine PEM-Brennstoffzelle sein kann, die mit einer Protonen-Transport-Membran bzw. mit einer Polymer-Elektrolyt-Membran als Elektrolyt 6 arbeitet. Die vorliegende Erfindung ist von besonderer Bedeutung für eine Hochtemperatur-Brennstoffzelle. Die Brennstoffzelle 2 erhält eingangsseitig über eine an die Anodenseite 4 angeschlossene Anodengasleitung 7 ein durch das Brenngas gebildetes Anodengas. Ein Wasserstoffgas enthaltendes Anodenabgas verlässt die Brennstoffzelle 2 ausgangsseitig über eine Anodenabgasleitung 8, die ebenfalls an die Anodenseite 4 angeschlossen ist. Desweiteren erhält die Brennstoffzelle 2 eingangsseitig über eine an die Kathodenseite 5 angeschlossene Kathodengasleitung 9 ein durch das Oxidatorgas gebildetes Kathodengas. Ein Sauerstoffgas enthaltenden Kathodenabgas verlässt die Brennstoffzelle 2 ausgangsseitig über eine Kathodenabgasleitung 10, die hierzu an die Kathodenseite 5 angeschlossen ist.

Die erste Oxidatorversorgungseinrichtung 3 ist zum Zuführen von Oxidatorgas, also insbesondere von Luft, zur Brennstoffzelle 2 ausgestaltet. Hierzu weist die erste Oxidatorversorgungseinrichtung 3 eine (erste) Versorgungsleitung 11 auf, in der eine geeignete (erste) Fördereinrichtung 12, z.B. eine Pumpe oder Gebläse, zum Antreiben des Oxidatorgases angeordnet ist. Die erste Versorgungsleitung 11 bildet hier die Kathodengasleitung 9 und führt somit der Brennstoffzelle 2 das Kathodengas unmittelbar zu.

Vorzugsweise ist das Brennstoffzellensystem 1 außerdem mit einem Reformer 16 ausgestattet, der zum Erzeugen des Brenngases aus einem Kraftstoff und einem Oxidatorgas, vorzugsweise Luft, dient. Hierzu ist der Reformer 16 eingangsseitig an eine Kraftstoffleitung 17 und an eine Oxidatorleitung 18 angeschlossen. In der Kraftstoffleitung 17 ist eine Fördereinrichtung 19 zum Antreiben des Kraftstoffs angeordnet, z.B. eine Pumpe. Beim Kraftstoff handelt es sich um einen atomaren Wasserstoff enthaltenden Kraftstoff, vorzugsweise um einen Kohlenwasserstoff. Zweckmäßig kann dabei derjenige Kraftstoff verwendet werden, der in einem mit dem Brennstoffzellensystem 1 ausgestatteten Kraftfahrzeug ohnehin zum Betreiben einer Brennkraftmaschine des Fahrzeugs vorhanden ist, also insbesondere Benzin, Diesel, Biodiesel, Erdgas.

Die Oxidatorleitung 18 führt dem Reformer 16 das Oxidatorgas zu. Zur Versorgung des Reformers 16 mit Oxidatorgas ist im gezeigten Beispiel eine (zweite) Oxidatorversorgungseinrichtung 13 vorgesehen, die in einer (zweiten) Versorgungsleitung 14 eine (zweite) Fördereinrichtung, z.B. eine Pumpe oder ein Gebläse, enthält. Im Beispiel ist die zweite Versorgungsleitung 14 aufgezweigt, nämlich in einen ersten Versorgungsleitungszweig 40 und einen zweiten Versorgungsleitungszweig 41. Der erste Versorgungsleitungszweig 40 bildet hier die Oxidatorleitung 18 zur Versorgung des Reformers 16 mit Oxidatorgas. Zur gezielten Aufteilung des mit der Fördereinrichtung 15 geförderten Oxidatorgases von der gemeinsamen zweiten Versorgungsleitung 14 auf die einzelnen Versorgungsleitungszweige 40, 41 kann eine Ventileinrichtung 42 vorgesehen sein, die über eine entsprechende Steuerung 43 gezielt so betätigbar ist, dass die jeweils erforderliche Oxidatorgasmenge durch den jeweiligen Versorgungsleitungszweig 40, 41 förderbar ist. Die Steuerung 43 ist über entsprechende Steuerleitungen 44 mit den steuerbaren Komponenten des Brennstoffzellensystems 1 auf geeignete Weise verbunden.

Das Brennstoffzellensystem 1 kann außerdem einen Restgasbrenner 20 aufweisen, der zum Verbrennen von Anodenabgas mit Kathodenabgas ausgestaltet ist. Hierzu ist der Restgasbrenner 20 eingangsseitig an die Anodenabgasleitung 8 und an die Kathodenabgasleitung 10 angeschlossen. Bevorzugt ist der Restgasbrenner 20 mit einem Brennraum 21 ausgestattet, in dem eine Verbrennungsreaktion mit offener Flamme abläuft. Grundsätzlich ist jedoch auch ein Restgasbrenner 20 denkbar, der einen Oxidationskatalysator aufweist und mit katalytischer Verbrennung arbeitet. Ausgangsseitig ist an den Restgasbrenner 20 eine Abgasleitung 22 angeschlossen, über die ein durch die Verbrennungsreaktion gebildetes Brennerabgas vom Restgasbrenner 20 abgeführt wird. Optional kann an den Restgasbrenner 20 eine Kühlgasleitung 23 angeschlossen sein, und zwar insbesondere kathodenseitig. Über die Kühlgasleitung 23 ist bei Bedarf ein Kühlgas, vorzugsweise Luft, dem Restgasbrenner 20 zuführbar. Im gezeigten Beispiel ist die Kühlgasleitung 23 durch den zweiten Versorgungsleitungszweig 41 gebildet.

Bei den hier gezeigten bevorzugten Ausführungsformen versorgt die erste Oxidatorversorgungseinrichtung 3 nur die Brennstoffzelle 2 mit Oxidatorgas bzw. Kathodengas, während die zweite Oxidatorversorgungseinrichtung 13 den Reformer 16 und den Restgasbrenner 20 mit Oxidatorgas bzw. mit Kühlgas versorgt. Es ist klar, dass bei anderen Ausführungsformen grundsätzlich auch eine gemeinsame Oxidatorversorgungseinrichtung zur Versorgung der Brennstoffzelle 2, des Reformers 16 und des Restgasbrenners 20 mit Oxidatorgas vorgesehen sein kann, beispielsweise kann hierzu die Kathodengasleitung 9 durch einen dritten Versorgungsleitungszweig gebildet sein, der ebenfalls über die Ventileinrichtung 42 ansteuerbar ist.

Das Brennstoffzellensystem 1 kann desweiteren zumindest einen Wärmeübertrager aufweisen. In den gezeigten Beispielen sind jeweils drei Wärmeübertrager vorgesehen, nämlich ein Hauptwärmeübertrager 24, ein Zusatzwärmeübertrager 25 und ein Rezirkulationswärmeübertrager 26. Der Hauptwärmeübertrager 24 ist einerseits in die Abgasleitung 22 und andererseits in die Kathodengasleitung 9 eingebunden. Der Hauptwärmeübertrager 24 dient zur Übertragung von Wärme vom Brennerabgas auf das Kathodengas. Der Zusatzwärmeübertrager 25 ist einerseits in die Abgasleitung 22 und andererseits in eine Leitung 27 eingebunden, die zu einem grundsätzlich beliebigen Wärmeverbraucher führen kann. Insbesondere kann der Zusatzwärmeübertrager 25 über die Leitung 27 in einen Kühlkreis einer Brennkraftmaschine des mit dem Brennstoffzellensystem 1 ausgestatteten Fahrzeugs oder in einem Heizkreis zum Aufwärmen eines Fahrzeuginnenraums des mit dem Brennstoffzellensystem 1 ausgestatteten Fahrzeugs eingebunden sein. Der Zusatzwärmeübertrager 25 ist in der Abgasleitung 22 stromab des Hauptwärmeübertragers 24 angeordnet und kann dem Brennerabgas zusätzliche Wärme entziehen. Der Rezirkulationswärmeübertrager 26 ist einerseits in die Oxidatorgasleitung 18 bzw. in den ersten Versorgungsleitungszweig 40 und andererseits in eine Rezirkulationsleitung 28 eingebunden. Alternativ kann der Rezirkulationswärmeübertrager 26 auch die Rezirkulationsleitung 28 mit der Kathodengasleitung 9, insbesondere stromauf des Hauptwärmeübertragers 24, wärmeübertragend koppeln. Die Rezirkulationsleitung 28 zweigt bei 29 von der Anodenabgasleitung 8 ab und ist an die Eingangsseite des Reformers 16 angeschlossen. Sie enthält stromab des Rezirkulationswärmeübertragers 26 eine Fördereinrichtung 30 zum Antreiben des rezirkulierten Anodenabgases, bei der es sich beispielsweise um eine Pumpe, ein Gebläse oder einen Kompressor handeln kann. Das Anodenabgas kann je nach Betriebszustand der Brennstoffzelle 2 einen relativ hohen Anteil an Wasserstoffgas enthalten und kann somit durch die Rückführung in den Reformer 16 zur Steigerung des Wirkungsgrads genutzt werden.

Brennstoffzelle 2, Restgasbrenner 20, Hauptwärmeübertrager 24, Zusatzwärmeübertrager 25 und Rezirkulationswärmeübertrager 26 bilden in den gezeigten Beispielen jeweils separate Komponenten. Grundsätzlich ist es jedoch möglich, zumindest zwei dieser Komponenten baulich zu einer Einheit zu integrieren. Beispielsweise kann der Restgasbrenner 20 in eine Ausgangsseite der Brennstoffzelle 2 integriert werden. Zusätzlich oder alternativ kann der Hauptwärmeübertrager 24 in die Ausgangsseite des Restgasbrenners 20 integriert werden. Ebenso ist es möglich, zwei oder drei dieser Wärmeübertrager 24, 25, 26 zu einer baulichen Einheit zu integrieren.

Das Brennstoffzellensystem 1 ist außerdem mit einer thermisch isolierenden Isolationshülle 31 ausgestattet, die vorzugsweise ein thermisch isolierendes Material aufweist. Beispielsweise kann es sich um eine Blechbox handeln, die innen und/oder außen mit dem Isolationsmaterial versehen ist. Das von der Isolationshülle 31 umschlossene bzw. umhüllte Volumen bildet einen Innenraum 32, der hier für Komponenten des Brennstoffzellensystems 1 als Einbauraum genutzt wird. Dementsprechend sind im Innenraum 32 zumindest die Brennstoffzelle 2 und optional zumindest eine der Komponenten Reformer 16, Restgasbrenner 20, Hauptwärmeübertrager 24, Rezirkulationswärmeübertrager 26, Fördereinrichtung 30 angeordnet. Ohne Beschränkung der Allgemeinheit sind in den gezeigten Beispielen der Reformer 16, die Brennstoffzelle 2, der Restgasbrenner 20 und der Hauptwärmeübertrager 24 innerhalb der Isolationshülle 31, also im Innenraum 32 angeordnet. Denkbar ist auch eine Ausführungsform, bei der die Isolationshülle 31 aus mehreren Teilhüllen besteht. Der Innenraum 32 besteht dann entsprechend aus mehreren Teil-Innenräumen, die insbesondere miteinander kommunizieren. Beispielsweise kann eine solche Teilhülle zumindest den Reformer 16 umschließen, während eine andere Teilhülle zumindest die Brennstoffzelle 2 und den Restgasbrenner 20 umschließt. In den gezeigten Beispielen sind der Zusatzwärmeübertrager 25 und der Rezirkulationswärmeübertrager 26 sowie die Fördereinrichtungen 12, 15, 19, 30 außerhalb der Isolationshülle 31 angeordnet; ebenso befindet sich zweckmäßig die Steuerung 43 ebenfalls außerhalb der Isolationshülle 31.

Die Isolationshülle 31 enthält mehrere Durchgangsöffnungen 33, durch welche die Kraftstoffleitung 17, die Abgasleitung 22, die Rezirkulationsleitung 28, die Kühlgasleitung 23 und die Kathodengasleitung 9 durch die Isolationshülle 31 hindurchgeführt sind. Diese Durchführung der genannten Leitungen erfolgen dabei zweckmäßig so, dass die gewünschte thermische Isolierung gewährleistet ist. Außerdem kann in den Durchführungen eine gewünschte Gasdichtigkeit und - falls erforderlich - eine gewünschte Druckdichtigkeit erreicht werden. Insbesondere ist im Bereich der mit den entsprechenden Anschlüssen versehenen Eingangsseite des Reformers 16 die zugehörige Durchgangsöffnung 33 so gestaltet, dass zumindest die Kraftstoffleitung 17 direkt an den Reformer 16 anschließbar ist, ohne dass sich die Kraftstoffleitung 17 dabei innerhalb des Innenraums 32 erstreckt. Vorzugsweise bildet ein Abschnitt der Reformereingangsseite einen Teil der Isolationshülle 31.

Bei den gezeigten Beispielen verlaufen bzw. liegen Teile des Brennstoffzellensystems 1 außerhalb der Isolationshülle 31, wie z.B. Abschnitte der Versorgungsleitungen 11, 14 sowie der Rezirkulationsleitung 28 und der Rezirkulationswärmeübertrager 26. Denkbar ist auch eine Ausführungsform, bei welcher die genannten Teile vollständig oder wenigstens weitgehend innerhalb der Isolationshülle 31 angeordnet sind.

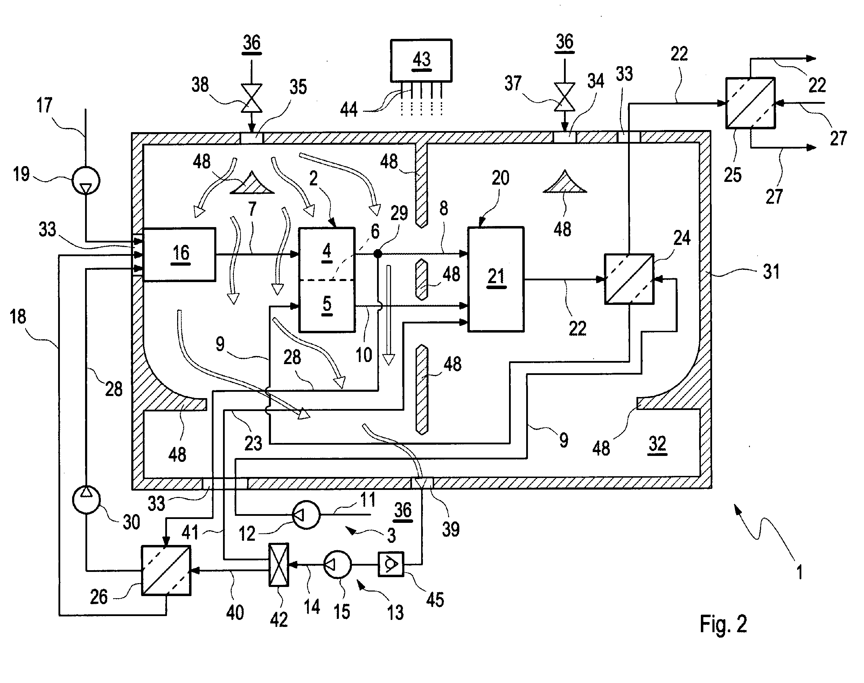

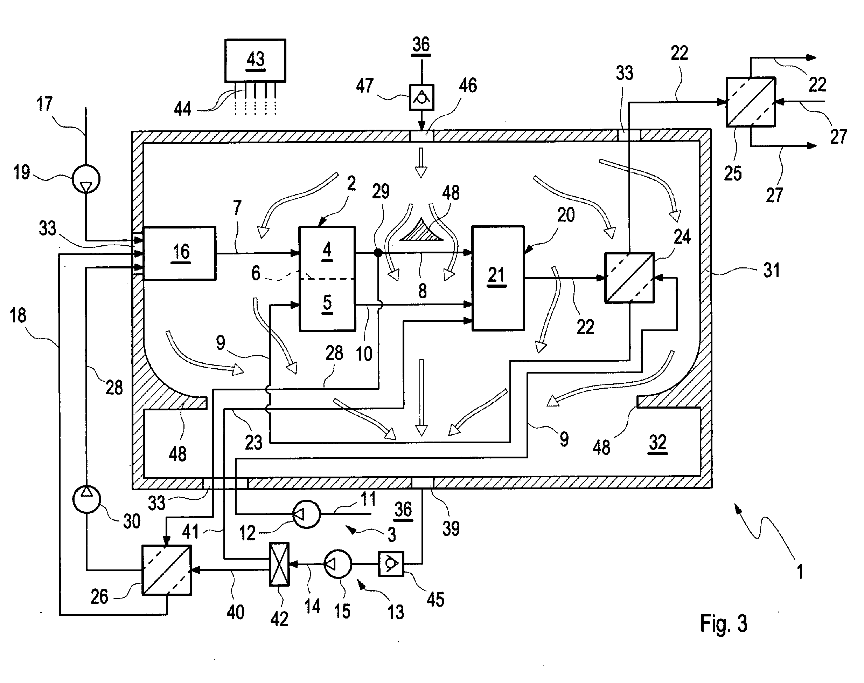

Bei der in den Fig. 1 und 2 gezeigten Ausführungsform weist die Isolationshülle 31 außerdem zwei Einlassöffnungen, nämlich eine erste Einlassöffnung 34 und eine zweite Einlassöffnung 35 auf, durch die Oxidatorgas, also vorzugsweise Luft aus einer Umgebung 36 des Brennstoffzellensystems 1 in den Innenraum 32 der Isolationshülle 31 gelangt. Bei dieser Ausführungsform sind die beiden Einlassöffnungen 34, 35 jeweils mittels eines Ventils 37 bzw. 38 schaltbar. Die Ventile 37, 38 sind hierzu auf geeignete Weise mit der Steuerung 43 verbunden. Im Unterschied zu der in den Fig. 1 und 2 gezeigten Ausführungsform, die sich zumindest durch zwei beabstandete bzw. durch zwei separat schaltbare Einlassöffnungen 34, 35 auszeichnet, zeigt Fig. 3 eine andere Ausführungsform, bei welcher die Isolationshülle 31 zumindest eine Einlassöffnung 46 aufweist, der ein Rückschlagsperrventil 47 zugeordnet sein kann, das in Richtung zum Innenraum 32 hin öffnet.

Ferner besitzt die Isolationshülle 31 zumindest eine Auslassöffnung 39, an welche z.B. die zweite Versorgungsleitung 14 angeschlossen ist. Dementsprechend kann die zweite Oxidatorversorgungseinrichtung 13 das Oxidatorgas durch die Auslassöffnung 39 aus dem Innenraum 32 ansaugen. Hierdurch wird eine gewisse Spülung des Innenraums 32 gewährleistet, die verhindert, dass innerhalb des Innenraums 32 eine kritische Konzentration an Brenngas entstehen kann, das aufgrund von Leckagen in den Innenraum 32 gelangen kann. Bevorzugt kann auch der Auslassöffnung 39 ein Rückschlagsperrventil 45 zugeordnet sein, das zum Innenraum 32 hin sperrt und das z.B. in der zweiten Versorgungsleitung 14 angeordnet sein kann.

Durch das Anschließen der zweiten Versorgungsleitung 14 an die Auslassöffnung 39 und durch die an der Isolationshülle 31 vorgesehenen Einlassöffnungen 34, 35 bzw. 46 bildet der Innenraum 32 einen Bestandteil eines Gaspfads, über den der Reformer 16 mit Oxidatorgas versorgt wird. Dies kann grundsätzlich zum Vorwärmen des Oxidatorgases genutzt werden. Hierzu ist bei den Brennstoffzellensystemen 1 der hier gezeigten Ausführungsformen der Gaspfad im Innenraum 32 gezielt so geführt, dass das Oxidatorgas je nach Betriebszustand des Brennstoffzellensystems 1 einerseits dem Restgasbrenner 20 und/oder dem Hauptwärmeübertrager 24 und andererseits der Brennstoffzelle 2 und/oder dem Reformer 16 Wärme entziehen kann, wenn es den Innenraum 32 durchströmt. Hierdurch kann das Temperaturniveau des Oxidatorgases erhöht werden, was den Betrieb des Brennstoffzellensystems 1 begünstigt.

Beispielsweise zeigt Fig. 1 einen Kaltstartbetriebszustand des Brennstoffzellensystems 1. Beim Kaltstart sind die einzelnen Komponenten des Brennstoffzellensystems 1 ausgekühlt und weisen im wesentlichen die gleiche Temperatur, nämlich vorzugsweise Umgebungstemperatur auf. Während des Kaltstartbetriebs betätigt die Steuerung 43 die den Einlassöffnungen 34, 35 zugeordneten Ventile 37, 38 so, dass die erste Einlassöffnung 34 geöffnet ist, während die zweite Einlassöffnungen 35 gesperrt ist. Das Oxidatorgas wird somit ausschließlich über die erste Einlassöffnung 34 in den Innenraum 32 eingesaugt. Im Innenraum 32 sind nun Strömungsleitelemente 48 angeordnet, die den Gaspfad im Innenraum 32 so führen, dass der Restgasbrenner 22 und hier auch der Hauptwärmeübertrager 24 vom angesaugten Oxidatorgas angeströmt bzw. umströmt werden, bevor es über die Auslassöffnung 39 den Innenraum 32 wieder verlässt. Eine entsprechende Strömungssituation ist in Fig. 1 durch nicht näher bezeichnete Pfeile angedeutet. Während des Kaltstartbetriebs heizt sich der Restgasbrenner 20 deutlich schneller auf als die Brennstoffzelle 2 und der Reformer 16. Dementsprechend kann durch die Beaufschlagung des Restgasbrenners 20 mit Oxidatorgas dem Restgasbrenner 20 Wärme entzogen werden, die zur Vorwärmung des Oxidatorgases genutzt werden kann. Da sich der Hauptwärmeübertrager 24 unmittelbar an den Restgasbrenner 20 anschließt, wird auch der Hauptwärmeübertrager 24 vergleichsweise rasch aufgeheizt, so dass auch die Umströmung des Hauptwärmeübertragers 24 zur Temperaturerhöhung des Oxidatorgases genutzt werden kann.

Fig. 2 zeigt nun einen Normalbetriebszustand bzw. einen Warmstartbetriebszustand des Brennstoffzellensystems 1. Beim Warmstart sind diejenigen Komponenten des Brennstoffzellensystems 1, die eine vergleichsweise hohe Wärmekapazität aufweisen, noch vergleichsweise heiß. Dies sind vor allem die Brennstoffzelle 2 und auch der Reformer 16. Im Unterschied dazu kann der Restgasbrenner 20 vergleichsweise rasch auskühlen, ebenso wie der Hauptwärmeübertrager 24. Für diesen Warmstartbetrieb betätigt die Steuerung 23 die Ventile 37, 38 so, dass die erste Einlassöffnung 34 gesperrt ist, während die zweite Einlassöffnung 35 geöffnet ist. Diese Schaltstellung kann auch für den Normalbetriebszustand des Brennstoffzellensystems 1 realisiert werden. Bei dieser Schaltstellung wird das Oxidatorgas somit ausschließlich durch die zweite Einlassöffnung 35 angesaugt, wodurch sich, insbesondere in Verbindung mit den Strömungsleitelementen 48 eine gezielte Anströmung und Umströmung der Brennstoffzelle 2 sowie hier auch des Reformers 16 ausbilden kann. Dementsprechend kann das Oxidatorgas Wärme vom Reformer 16 und von der Brennstoffzelle 2 aufnehmen, was das Temperaturniveau des Oxidatorgases erhöht. Für den Warmstartbetrieb kann dadurch die Zeit bis zum Erreichen der Betriebstemperatur der Brennstoffzelle 2 verkürzt werden. Während des Normalbetriebs kann durch diese Strömungsführung die Brennstoffzelle 2 gekühlt werden, ebenso wie der Reformer 16.

Im Unterschied zur Ausführungsform der Fig. 1 und 2 zeigt Fig. 3 eine Ausführungsform, bei welcher der Ort für den Einlass des Oxidatorgases bzw. die Führung des Oxidatorgases innerhalb der Isolationshülle 31 nicht steuerbar ist. Dafür ist bei der in Fig. 3 gezeigten Ausführungsform der Gaspfad im Innenraum 31 gezielt so gestaltet, dass das über die wenigstens eine Einlassöffnung 46 einströmende Oxidatorgas sowohl mit der Brennstoffzelle 2 als auch mit dem Restgasbrenner 20 wärmeübertragend gekoppelt ist. Optional kann auch vorgesehen sein, dass das einströmende Oxidatorgas zusätzlich mit dem Reformer 16 und/oder mit dem Hauptwärmeübertrager 24 wärmeübertragend gekoppelt ist. Eine derartige Anströmung bzw. Umströmung der genannten Komponenten kann ebenfalls mittels Strömungsleitelementen 48 realisiert werden. Diese Ausführungsform zeichnet sich dadurch aus, dass während des Kaltstartbetriebs die An- bzw. Umströmung des Restgasbrenners 20 sowie gegebenenfalls des Hauptwärmeübertragers 24 das Temperaturniveau des Oxidatorgases signifikant erhöhen kann. Im Unterschied dazu kann während des Warmstartbetriebs bzw. während des Normalbetriebs durch die An- bzw. Umströmung der Brennstoffzelle 2 und gegebenenfalls des Reformers 16 ebenfalls eine Temperaturerhöhung im Oxidatorgas bzw. eine Kühlung für den Reformer 16 bzw. die Brennstoffzelle 2 erreicht werden. Die in Fig. 3 gezeigte Ausführungsform arbeitet weniger effizient als die in den Fig. 1 und 2 gezeigte Ausführungsform, ist jedoch mit einem reduzierten Aufwand realisierbar.

Insbesondere kann wie bei den hier gezeigten Ausführungsformen die erste Oxidatorversorgungseinrichtung 3 das Oxidatorgas bzw. das Kathodengas aus der Umgebung 36 direkt ansaugen. Ebenso ist eine Ausführungsform möglich, bei welcher auch die erste Oxidatorversorgungseinrichtung 3 das Kathodengas aus dem Innenraum 32 der Isolationshülle 31 ansaugt. Beispielsweise ist dann auch die erste Versorgungsleitung 11 eingangsseitig an die Auslassöffnung 39 angeschlossen. Ebenso ist grundsätzlich eine Ausführungsform denkbar, bei der ausschließlich die erste Versorgungsleitung 11 an die Auslassöffnung 39 angeschlossen ist und bei der die zweite Oxidatorversorgungseinrichtung 13 das Oxidatorgas aus der Umgebung 36 direkt ansaugt.

## Patentansprüche

1. Brennstoffzellensystem, insbesondere in einem Kraftfahrzeug,
- mit wenigstens einer Brennstoffzelle (2) zum Generieren von elektrischem Strom aus einem Wasserstoffgas enthaltenden Anodengas und einem Sauerstoffgas enthaltenden Kathodengas,
- mit einer thermisch isolierenden Isolationshülle (31), die einen zumindest die Brennstoffzelle (2) aufnehmenden Innenraum (32) umhüllt,
- wobei ein Gaspfad zur Versorgung der Brennstoffzelle (2) mit Kathodengas durch die Isolationshülle (31) hindurchgeführt ist, derart, dass deren Innenraum (32) einen Bestandteil des Gaspfads bildet,
- wobei der Gaspfad im Innenraum (32) so verläuft, dass das Kathodengas der Brennstoffzelle (2) Wärme entzieht, bevor es in die Brennstoffzelle (2) eintritt,
- wobei im Innenraum (32) ein Restgasbrenner (20) angeordnet ist, der im Betrieb Wasserstoffgas enthaltendes Anodenabgas mit Sauerstoffgas enthaltendem Kathodenabgas verbrennt,
- wobei der Gaspfad im Innenraum (32) so verläuft, dass das Kathodengas dem Restgasbrenner (20) Wärme entzieht, bevor es in die Brennstoffzelle (2) eintritt,
**dadurch gekennzeichnet,**
**dass** der Gaspfad steuerbar ist, derart, dass das Kathodengas bei einem Kaltstartbetrieb bevorzugt oder ausschließlich den Restgasbrenner (20) beaufschlagt und bei einem Warmstartbetrieb oder bei einem Normalbetrieb bevorzugt oder ausschließlich die Brennstoffzelle (2) beaufschlagt.

2. Brennstoffzellensystem nach Anspruch 1,
**dadurch gekennzeichnet,**
**dass** der Gaspfad im Innenraum (32) so verläuft, dass das Kathodengas die Brennstoffzelle (2) anströmt und/oder umströmt, bevor es in die Brennstoffzelle (2) eintritt.

3. Brennstoffzellensystem, insbesondere in einem Kraftfahrzeug,
- mit einem Reformer (16) zum Genieren von Wasserstoffgas enthaltendem Anodengas aus einem Wasserstoff enthaltenden Kraftstoff und einem Sauerstoff enthaltenden Oxidatorgas,
- mit wenigstens einer Brennstoffzelle (2) zum Generieren von elektrischem Strom aus dem Anodengas und einem Sauerstoffgas enthaltenden Kathodengas,
- mit einer thermisch isolierenden Isolationshülle (31), die einen zumindest die Brennstoffzelle und/oder den Reformer (16) aufnehmenden Innenraum (32) umhüllt,
- wobei ein Gaspfad zur Versorgung der Brennstoffzelle (2) mit Kathodengas und/oder zur Versorgung des Reformers (16) mit Oxidatorgas durch die Isolationshülle (31) hindurchgeführt ist, derart, dass deren Innenraum (32) einen Bestandteil des Gaspfads bildet,
- wobei der Gaspfad im Innenraum (32) so verläuft, dass das Kathodengas und/oder das Oxidatorgas dem Reformer (16) und/oder der Brennstoffzelle (2) Wärme entzieht, bevor es in die Brennstoffzelle (2) und/oder in den Reformer (16) eintritt,
- wobei im Innenraum (32) ein Restgasbrenner (20) angeordnet ist, der im Betrieb Wasserstoffgas enthaltendes Anodenabgas mit Sauerstoffgas enthaltendem Kathodenabgas verbrennt,
- wobei der Gaspfad im Innenraum (32) so verläuft, dass das Kathodengas dem Restgasbrenner (20) Wärme entzieht, bevor es in die Brennstoffzelle (2) eintritt,
**dadurch gekennzeichnet,**
**dass** der Gaspfad steuerbar ist, derart, dass das Oxidatorgas und/oder das Kathodengas bei einem Kaltstartbetrieb bevorzugt oder ausschließlich den Restgasbrenner (20) und/oder den Wärmeübertrager (24) beaufschlagt und bei einem Warmstartbetrieb oder bei einem Normalbetrieb bevorzugt oder ausschließlich die Brennstoffzelle (2) und/oder den Reformer (16) beaufschlagt.

4. Brennstoffzellensystem nach Anspruch 3,
**dadurch gekennzeichnet,**
**dass** der Gaspfad im Innenraum (32) so verläuft, dass das Kathodengas und/oder das Oxidatorgas die Brennstoffzelle (2) und/oder den Reformer (16) anströmt und/oder umströmt, bevor es in den Reformer (16) und/oder in die Brennstoffzelle (2) eintritt.

5. Brennstoffzellensystem nach einem der Ansprüche 1 bis 4,
**dadurch gekennzeichnet,**
**dass** der Gaspfad im Innenraum (32) so verläuft, dass das Oxidatorgas und/oder das Kathodengas den Restgasbrenner (20) umströmt und/oder anströmt, bevor es in den Reformer (16) und/oder in die Brennstoffzelle (2) eintritt.

6. Brennstoffzellensystem nach einem der Ansprüche 1 bis 5,
**dadurch gekennzeichnet,**
- **dass** im Innenraum (32) ein Wärmeübertrager (24) zur wärmeübertragenden Kopplung von Brennerabgas des Restgasbrenners (20) mit Kathodengas und/oder Oxidatorgas angeordnet ist,
- **dass** der Gaspfad im Innenraum (32) so verläuft, dass das Kathodengas und/oder das Oxidatorgas dem Wärmeübertrager (24) Wärme entzieht, bevor es in den Wärmeübertrager (24) und/oder in den Reformer (16) und/oder in die Brennstoffzelle (2) eintritt, wobei der Gaspfad im Innenraum (32) insbesondere so verlaufen kann, dass das Oxidatorgas und/oder das Kathodengas den Wärmeübertrager (24) anströmt und/oder umströmt bevor es in den Wärmeübertrager (24) und/oder in den Reformer (16) und/oder in die Brennstoffzelle (2) eintritt.

7. Brennstoffzellensystem nach einem der Ansprüche 1 bis 6,
**dadurch gekennzeichnet,**
**dass** der Gaspfad im Innenraum (32) so verläuft, dass das Oxidatorgas und/oder das Kathodengas sowohl den Restgasbrenner (20) als auch die Brennstoffzelle (2) beaufschlagt, bevor es in den Reformer (16) und/oder in die Brennstoffzelle (2) eintritt.

8. Brennstoffzellensystem nach einem der Ansprüche 1 bis 7,
**dadurch gekennzeichnet,**
- **dass** die Isolationshülle (31) gasdicht und/oder druckdicht ausgestaltet ist, und/oder
- **dass** im Innenraum (32) Strömungsleitelemente (48) angeordnet sind, um den Gaspfad zur Beaufschlagung der Brennstoffzelle (2) und/oder des Restgasbrenners (20) und/oder des Reformers (16) und/oder des Wärmeübertragers (24) zu führen.

## Claims

1. A fuel cell system, particularly in a motor vehicle,
- with at least one fuel cell (2) for generating electric power from an anode gas containing hydrogen gas and an oxygen gas containing cathode gas,
- with a thermally insulating insulating envelope (31), which envelopes an interior space (32) receiving at least the fuel cell (2),
- wherein a gas path for the supply of the fuel cell (2) with cathode gas is routed through the insulating envelope (31) in such a manner that its interior space (32) forms a part of the gas path,
- wherein the gas path in the interior space (32) follows a course such that the cathode gas extracts heat from the fuel cell (2) before it enters the fuel cell (2),
- wherein in the interior space (32) a residual gas burner (20) is arranged, which in operation combusts anode waste gas containing hydrogen gas with cathode waste gas containing oxygen gas,
- wherein the gas path in the interior space (32) follows such a course that the cathode gas extracts heat from the residual gas burner (20) before it enters the fuel cell (2),
**characterized in** the gas path is controllable in such a manner that the cathode gas during cold start operation is preferably or exclusively admitted to the
residual gas burner (20) and during a warm starting operation or during a normal operation is preferably or exclusively admitted to the fuel cell (2).

2. The fuel cell system according to Claim 1, **characterized in that** the gas path in the interior space (32) follows such a course that the cathode gas flows onto and/or flows about the fuel cell (2) before it enters the fuel cell (2).

3. The fuel cell system, particularly in a motor vehicle,
- with a reformer (16) for generating anode gas containing hydrogen gas from a fuel containing hydrogen and an oxidant gas containing oxygen,
- with at least one fuel cell (2) for generating electric power from the anode gas and a cathode gas containing oxygen gas,
- with a thermally insulating insulating envelope (31) enveloping an interior space (32) receiving at least the fuel cell and/or the reformer (16),
- wherein a gas path for the supply of the fuel cell (2) with cathode gas and/or for the supply of the reformer (16) with oxidant gas is routed through the insulating envelope (31) in such a manner that its interior space (32) forms a part of the gas path,
- wherein the gas path so follows a route in the interior space (32) that the cathode gas and/or the oxidant gas extracts heat from the transformer (16) and/or the fuel cell (2) before it enters the fuel cell (2) and/or the reformer (16),
- wherein in the interior space (32) a residual gas burner (20) is arranged, which during operation combusts anode waste gas containing hydrogen gas with cathode waste gas containing oxygen gas,
- wherein the gas path in the interior space (32) follows such a course that the cathode gas extracts heat from the residual gas burner (20) before it enters the fuel cell (2),
**characterized in that** the gas path is controllable in such a manner that the oxidant gas and/or the cathode gas during a cold starting operation is preferably or exclusively admitted to the residual gas burner (20) and/or the heat transfer device (24) and during a warm starting operation or during a normal operation is preferably or exclusively admitted to the fuel cell (2) and/or the reformer (16).

4. The fuel cell system according to Claim 3, **characterized in that** the gas path in the interior space (32) follows such a course that the cathode gas and/or the oxidant gas flows onto and/or flows about the fuel cell (2) and/or the reformer (16) before it enters the reformer (16) and/or the fuel cell (2).

5. The fuel cell system according to any one of the Claims 1 to 4, **characterized in that** the gas path in the interior space (32) follows such a course that the oxidant gas and/or the cathode gas flows about and/or flows onto the residual gas burner (20) before it enters the reformer (16) and/or the fuel cell (2).

6. The fuel cell system according to any one of the Claims 1 to 5, **characterized**
- **in that** in the interior space (32) a heat transfer device (24) for the heat-transferring coupling of burner waste gas of the residual gas burner (20) with cathode gas and/or oxidant gas is arranged,
- **in that** the gas path in the interior space (32) follows such a course that the cathode gas and/or the oxidant gas extracts heat from the heat transfer device (24) before it enters the heat transfer device (24) and/or the reformer (16) and/or the fuel cell (2), wherein the gas path can more preferably follow such a course in the interior space (32) that the oxidant gas and/or the cathode gas flows onto and/or flows about the heat transfer device (24) before it enters the heat transfer device (24) and/or the reformer (16) and/or the fuel cell (2).

7. The fuel cell system according to any one of the Claims 1 to 6, **characterized in that** the gas path in the interior space (32) follows such a course that the oxidant gas and/or the cathode gas are/is admitted to the residual gas burner (20) as well as the fuel cell (2) before it enters the reformer (16) and/or the fuel cell (2).

8. The fuel cell system according to any one of the Claims 1 to 7, **characterized**
- **in that** the insulating envelope (31) is designed gas-tight and/or pressure-tight, and/or
- **in that** in the interior space (32) flow guiding elements (48) are arranged in order to guide the gas path for the admission into the fuel cell (2) and/or into the residual gas burner (20) and/or into the reformer (16) and/or into the heat transfer device (24).

## Revendications

1. Système de pile à combustible, en particulier sur un véhicule automobile,
- comprenant au moins une pile à combustible (2) pour générer du courant électrique à partir d'un gaz d'anode contenant du gaz hydrogène et d'un gaz de cathode contenant du gaz oxygène,
- un manchon d'isolation (31) thermiquement isolant, qui enveloppe un espace intérieur (32) recevant au moins la pile à combustible (2),
- un chemin de gaz pour l'alimentation de la pile à combustible (2) en gaz de cathode étant guidé à travers le manchon d'isolation (31), de telle sorte que son espace intérieur (32) forme un élément constitutif du chemin de gaz,
- le chemin de gaz étant agencé dans l'espace intérieur (32), de telle sorte que le gaz de cathode prélève de la chaleur sur la pile à combustible (2) avant que le gaz entre dans la pile à combustible (2),
- un brûleur de gaz résiduel (20) étant disposé dans l'espace intérieur (32), lequel brûleur consume pendant le fonctionnement du gaz d'anode contenant du gaz hydrogène avec du gaz de cathode contenant du gaz oxygène,
- le chemin de gaz étant agencé dans l'espace intérieur (32), de telle sorte que le gaz de cathode prélève de la chaleur sur le brûleur de gaz résiduel (20) avant que le gaz entre dans la pile à combustible (2),
**caractérisé en ce que**
le chemin de gaz peut être commandé de telle sorte que le gaz de cathode alimente de préférence ou exclusivement le brûleur de gaz résiduel (20) dans le cas d'un fonctionnement de démarrage à froid et alimente de préférence ou exclusivement la pile à combustible (2) dans le cas d'un fonctionnement de démarrage à chaud ou dans le cas d'un fonctionnement normal.

2. Système de pile à combustible selon la revendication 1, **caractérisé en ce que** le chemin de gaz est agencé dans l'espace intérieur (32), de telle sorte que le gaz de cathode atteint et/ou entoure la pile à combustible (2) avant qu'il entre dans la pile à combustible (2).

3. Système de pile à combustible, en particulier sur un véhicule automobile,
- comprenant un reformeur (16) pour générer du gaz d'anode contenant du gaz hydrogène à partir d'un carburant contenant de l'hydrogène et d'un gaz oxydant contenant de l'oxygène,
- au moins une pile à combustible (2) pour générer du courant électrique à partir du gaz d'anode et d'un gaz de cathode contenant du gaz oxygène,
- un manchon d'isolation (31) thermiquement isolant, qui enveloppe un espace intérieur (32) recevant au moins la pile à combustible et/ou le reformeur (16),
- un chemin de gaz pour l'alimentation de la pile à combustible (2) en gaz de cathode et/ou pour l'alimentation du reformeur (16) en gaz oxydant étant guidé à travers le manchon d'isolation (31), de telle sorte que son espace intérieur (32) forme un élément constitutif du chemin de gaz,
- le chemin de gaz étant agencé dans l'espace intérieur (32), de telle sorte que le gaz de cathode et/ou le gaz oxydant prélève de la chaleur sur le reformeur (16) et/ou la pile à combustible (2), avant que le gaz entre dans la pile à combustible (2) et/ou dans le reformeur (16),
- un brûleur de gaz résiduel (20) étant disposé dans l'espace intérieur (32), lequel brûleur consume pendant le fonctionnement du gaz d'anode contenant du gaz hydrogène avec du gaz de cathode contenant du gaz oxygène,
- le chemin de gaz étant agencé dans l'espace intérieur (32), de telle sorte que le gaz de cathode prélève de la chaleur sur le brûleur de gaz résiduel (20) avant que le gaz entre dans la pile à combustible (2),
**caractérisé en ce que**
le chemin de gaz peut être commandé, de telle sorte que le gaz oxydant et/ou le gaz de cathode alimente de préférence ou exclusivement le brûleur de gaz résiduel (20) et/ou l'échangeur de chaleur (24) lors d'un fonctionnement de démarrage à froid et alimente de préférence ou exclusivement la pile à combustible (2) et/ou le reformeur (16) dans le cas d'un
fonctionnement de démarrage à chaud ou dans le cas d'un fonctionnement normal.

4. Système de pile à combustible selon la revendication 3, **caractérisé en ce que** le chemin de gaz est agencé dans l'espace intérieur (32), de telle sorte que le gaz de cathode et/ou le gaz oxydant atteint et/ou entoure la pile à combustible (2) et/ou le reformeur (16) avant que le gaz entre dans le reformeur (16) et/ou dans la pile à combustible (2).

5. Système de pile à combustible selon l'une quelconque des revendications 1 à 4, **caractérisé en ce que** le chemin de gaz est agencé dans l'espace intérieur (32), de telle sorte que le gaz oxydant et/ou le gaz de cathode enveloppe et/ou atteint le brûleur de gaz résiduel (20) avant que le gaz entre dans le reformeur (16) et/ou dans la pile à combustible (2).

6. Système de pile à combustible selon l'une quelconque des revendications 1 à 5,
**caractérisé en ce que**
- un échangeur de chaleur (24) est disposé dans l'espace intérieur (32) pour le couplage avec transfert de chaleur des gaz brûlés du brûleur de gaz résiduel (20) avec du gaz de cathode et/ou du gaz oxydant,
- **en ce que** le chemin de gaz est agencé dans l'espace intérieur (32), de telle sorte que le gaz de cathode et/ou le gaz oxydant prélève de la chaleur sur l'échangeur de chaleur (24) avant que le gaz entre dans l'échangeur de chaleur (24) et/ou dans le reformeur (16) et/ou dans la pile à combustible (2), le chemin de gaz étant agencé dans l'espace intérieur (32) en particulier de telle sorte que le gaz oxydant et/ou le gaz de cathode atteint et/ou entoure l'échangeur de chaleur (24) avant qu'il entre dans l'échangeur de chaleur (24) et/ou dans le reformeur (16) et/ou dans la pile à combustible (2).

7. Système de pile à combustible selon l'une quelconque des revendications 1 à 6, **caractérisé en ce que** le chemin de gaz est agencé dans l'espace intérieur (32), de telle sorte que le gaz oxydant et/ou le gaz de cathode alimente aussi bien le brûleur de gaz résiduel (20) que la pile à combustible (2) avant qu'il entre dans le reformeur (16) et/ou dans la pile à combustible (2).

8. Système de pile à combustible selon l'une quelconque des revendications 1 à 7,
**caractérisé**
- **en ce que** le manchon d'isolation (31) est conçu étanche aux gaz et/ou étanche à la pression, et/ou
- **en ce que** des éléments de guidage d'écoulement (48) sont disposés dans l'espace intérieur (32) afin de guider le chemin de gaz pour l'alimentation de la pile à combustible (2) et/ou du brûleur de gaz résiduel (20) et/ou du reformeur (16) et/ou de l'échangeur de chaleur (24).
